# EUROPEAN PATENT SPECIFICATION

(11) **EP 3 065 553 B1**
(45) Date of publication and mention of the grant of the patent: **19.08.2020**
(21) Application number: 14860526.4
(22) Date of filing: 07.11.2014
(51) Int. Cl.: A21D 13/31, A21D 13/38, A23L 33/20, A23P 30/25, A21D 13/37, A23P 30/20, A21D 2/26

(54) **DUAL-TEXTURED SNACK WITH FIBER BLEND**
DOPPELT TEXTURIERTES IMBISSPRODUKT MIT FASERMISCHUNG
EN-CAS À DOUBLE TEXTURE COMPRENANT UN MÉLANGE DE FIBRES

(30) Priority: 08.11.2013 US 201361901897 P
(43) Date of publication of application: 14.09.2016
(73) Proprietor: Intercontinental Great Brands LLC, East Hanover, NJ 07936 (US)
(72) Inventor: KINO, Alan, East Hanover, NJ 07936 (US); MAZZACCARO, Dawn, R., East Hanover, NJ 07936 (US); GOLDEN, Marty, East Hanover, NJ 07936 (US); BEAVER, Michelle, D., East Hanover, NJ 07936 (US); HAYNES, Lynn, C., East Hanover, NJ 07936 (US); ERRANDONEA, Francois, East Hanover, NJ 07936 (US); SMITH, Julie, East Hanover, NJ 07936 (US); SIRIS, Supapong, East Hanover, NJ 07936 (US)
(74) Representative: Boult Wade Tennant LLP
(86) International application number: PCT/US2014/064580
(87) International publication number: WO 2015/070033

(56) References cited:
- EP-A2- 0 372 596
- EP-A2- 0 372 596
- US-A- 4 698 232
- US-A1- 2009 220 654
- US-A1- 2013 101 698
- Paprikas: "CROISSANTS AUX PRUNEAUX - Paprikas", , 23 September 2007 (2007-09-23), XP55353894, Retrieved from the Internet: URL:http://www.paprikas.fr/article-5154686 9.html [retrieved on 2017-03-13]
- BETTY W. LI ET AL: "Individual Sugars, Soluble, and Insoluble Dietary Fiber Contents of 70 High Consumption Foods", JOURNAL OF FOOD COMPOSITION AND ANALYSIS, vol. 15, no. 6, December 2002 (2002-12), pages 715-723, XP55137814, ISSN: 0889-1575, DOI: 10.1006/jfca.2002.1096
- H R Bolin: "RELATION OF MOISTURE TO WATER ACTlVlTY IN PRUNES AND RAISINS", Journal of Food Science, 45, 1980, pages 1190-1192, XP055353906, Retrieved from the Internet: URL:http://onlinelibrary.wiley.com/doi/10. 1111/j.1365-2621.1980.tb06518.x/pdf [retrieved on 2017-03-13]

## Description

### BACKGROUND OF THE INVENTION

The present invention generally relates to food products that have a dual texture. It is desirable to develop a food product that has a first texture that is crispy or both crispy and crunchy and a second texture that is soft. It is also desirable that such a product retain its dual texture characteristics even after a long shelf life period. Such products are difficult to achieve in certain baked goods because, for example, moisture migration from a soft portion (such as a filling) to an outer shell crispy portion (e.g., a dough-based casing) has a tendency to reduce the moistness of the filling and the crispness of the outer shell and degrade the dual texture qualities of the product.

Patent application publication US 2009/220654 A1 relates to a shelf-stable, filled, baked crispy snack which possesses a crispy textured casing and a moist, soft textured filling over a prolonged period of time, obtained by formulating a casing which when baked has a high glass transition temperature (Tg) at a high moisture content. European patent application EP0372596 A2 relates to cookies made with a fiber-containing filling, the filling has a very low water activity (0.2-0.35) so that the crispiness of the cookies' outer dough is preserved.

### BRIEF SUMMARY OF THE INVENTION

The present invention provides a dual-textured foodstuff according to claim 1 and a method of producing a dual-textured foodstuff according to claim 5 in the claims appended hereto.

According to some embodiments of the present invention, a dual-textured foodstuff includes a total fiber content of 8 wt% to 17 wt% of the dual-textured foodstuff; a baked dough-based component; and a baked filling component present in an amount of 35 wt% to 60 wt% of the foodstuff, the baked filling component being in direct contact with the baked dough-based component; the dough-based component includes: a dough-based component fiber blend consisting of soluble fiber and insoluble fiber in a ratio of 9:1 to 0.43:1, wherein the soluble fiber consists of corn fiber and, optionally, resistant maltodextrin, and the insoluble fiber consists of oat fiber, the dough-based component includes the dough-based component fiber blend in an amount of 1 wt% to 20 wt% of the dough-based component; 40 wt% to 60 wt% of the total fiber content; and a crispy texture throughout the shelf life of the foodstuff, wherein the shelf life is at least one month; the baked filling component includes: a soft texture throughout the shelf life of the foodstuff, wherein the shelf life is at least one month; a relative humidity of 0.6 to 0.8; and a filling component fiber blend consisting of soluble fiber and insoluble fiber in a ratio of 9:1 to 0.43:1, wherein the soluble fiber consists of corn fiber and resistant maltodextrin, and the insoluble fiber consists of oat fiber, the filling component includes the filling component fiber blend in an amount of 1 wt% to 20 wt% of the filling component; 40 wt% to 60 wt% of the total fiber content; the dual-textured foodstuff has an overall relative humidity of about 0.50 to about 0.70 and a moisture content of 5% to 15%, as measured by Karl Fisher analysis.

In some embodiments, the dough-based component fiber blend has soluble fiber and insoluble fiber in a ratio of 3:1 to 1:1; or 2:1. In some embodiments, the soluble fiber of the dough-based component fiber blend includes soluble corn fiber and resistant maltodextrin in a ratio of 1:1 to 9:1.

In certain embodiments, the filling component fiber blend comprises soluble fiber and insoluble fiber in a ratio of 3:1 to 1:1; or 2:1. In some embodiments, the soluble fiber of the filling component fiber blend includes soluble corn fiber and resistant maltodextrin in a ratio of 1:1 to 9:1.

In certain embodiments, the soluble fiber includes dextrin, glucomannan, psyllium, resistant maltodextrin, soluble corn fiber, polydextrose, fructooligosaccharide, oligosaccharide, and combinations thereof. In some embodiments, the insoluble fiber includes cereal bran, resistant starch, fruit pomace, and combinations thereof.

In some embodiments, the filling component has a higher moisture content than the dough-based component. The some embodiments, the dough-based component completely encloses the filling component. In certain embodiments, the baked dough-based component is an extruded dough-based component. In some embodiments, the foodstuff is prepared by extrusion.

According to some embodiments of the present invention, a method for producing a dual-textured foodstuff includes: forming an unbaked dough comprising a dough-based component fiber blend that consists of soluble fiber and insoluble fiber in a ratio of 9:1 to 0.43:1, wherein the soluble fiber consists of corn fiber and, optionally, resistant maltodextrin, and the insoluble fiber consists of oat fiber, the unbaked dough including 40 wt% to 60 wt% of a total fiber content of the dual-textured foodstuff; adding a filling component in direct contact with the unbaked dough to form an unbaked foodstuff, the filling component having a relative humidity of 0.6 to 0.8, and the filling component including a filling component fiber blend consisting of soluble fiber and insoluble fiber in a ratio of 9:1 to 0.43:1, wherein the soluble fiber consists of corn fiber and, optionally, resistant maltodextrin; and baking the unbaked foodstuff to obtain a foodstuff having a dual texture including: a baked filling component present in an amount of 35 wt% to 60 wt% of the dual-textured foodstuff, the baked filling component having a soft texture maintained throughout the shelf life of the foodstuff; a baked dough-based component having a crispy texture maintained throughout the shelf life of the foodstuff; a total fiber content of 8 wt% to 17 wt% of the foodstuff; and an overall relative humidity of 0.50 to 0.70.

In some embodiments, the method includes completely enclosing the filling component within the dough. In some embodiments, the method includes coextruding the dough and the filling. In certain embodiments, forming an unbaked foodstuff includes extruding.

### BRIEF DESCRIPTION OF THE SEVERAL VIEWS OF THE DRAWINGS

The foregoing summary, as well as the following detailed description of certain embodiments of the food product will be better understood when read in conjunction with the following exemplary embodiments, the appended drawing and the appendices.

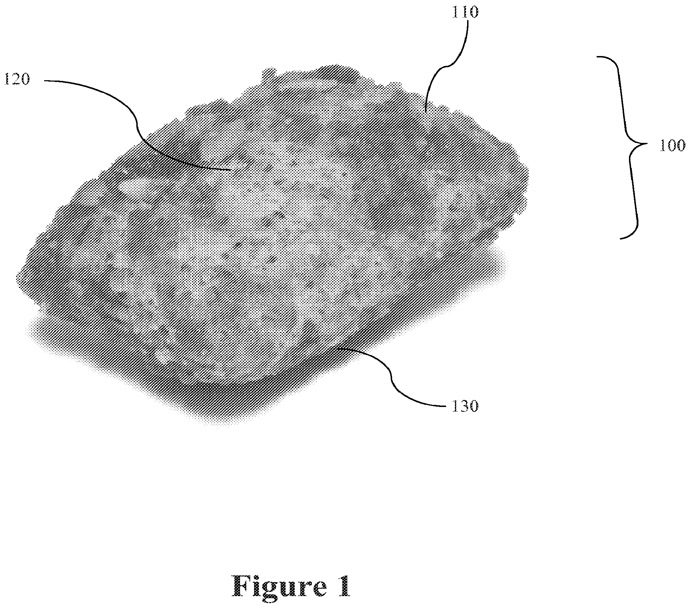

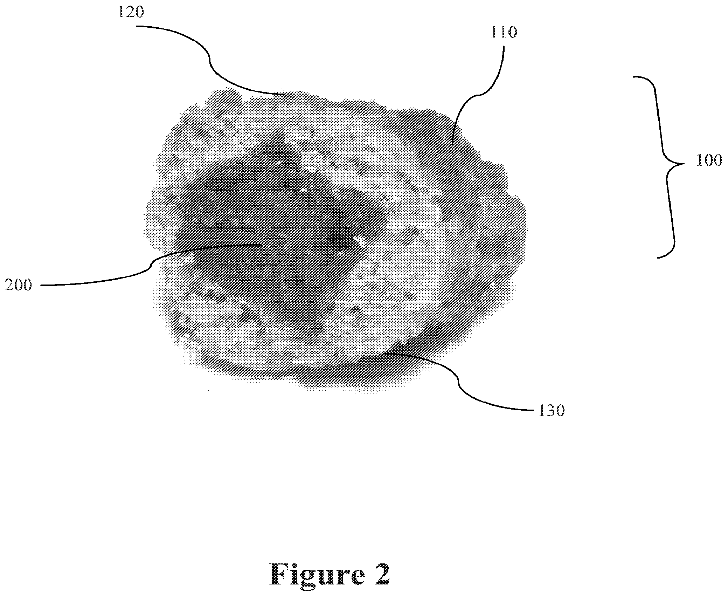

Figs. 1 and 2 are views of an exemplary embodiment of a baked foodstuff of the present invention.

### DETAILED DESCRIPTION OF THE INVENTION

Methods and compositions of the present invention relate to a shelf-stable, dual-textured foodstuff. In one embodiment, the foodstuff has a soft portion (e.g., a filling) and a crispy and/or crunchy dough-based portion (e.g., a casing). The foodstuff maintains a multiple texture (e.g. a dual texture) for an extended period of time after cooking (e.g., baking, frying) and, throughout the shelf life of the foodstuff. The foodstuff may be generally prepared by forming dough, adding a soft-textured portion, such as a filling, to create an unbaked foodstuff, and baking and/or drying to form the dual-textured foodstuff having a crispy dough-based portion and a soft filling portion. The dough-based portion may be formed to at least partially and in some instances, completely or substantially completely, surround the filling portion. The filling portion is in direct contact with the dough-based portion of the foodstuff. The dual texture of the foodstuff is maintained over a prolonged period of time by formulating the dough-based portion and/or filling portion to include a fiber blend.

In one embodiment, the foodstuff includes a dough-based portion (e.g., a casing or a layer) that affects moisture migration from an adjoining soft filling portion. The dough-based portion of the foodstuff may affect moisture migration from the adjoining filling portion such that the moisture equilibrates at a point where a dual-texture is maintained even when the filling portion has a high relative humidity (e.g., 0.6 to 0.8), when the foodstuff has a high percentage of filling (e.g., 35 wt% to 60 wt% of the foodstuff), and/or when the foodstuff has an overall relative humidity of 0.5 to 0.7.

In some embodiments, it is desirable to produce a dual-texture product that contains fiber. In some cases, it is preferable to include a good source of fiber (e.g., at least 2.5 g/serving) or higher (e.g., an excellent source of fiber, at least 5 g/serving). A variety of challenges may exist in producing such products that deliver good consumer perceptions of taste and texture while maintaining high enough levels of fiber to be a good source of fiber or higher. Products such as filled dough-based products that have low filling levels can be perceived by consumers as too dry, too crunchy, or too crispy. That perception could be magnified when one adds levels of fiber (e.g., to the filling, to the casing or to both) to deliver a good source or higher. Filled dough-based products with high levels of filling can be perceived by consumers as too soft and/or delivering a first bite that is not desirable. Adding a higher level of fiber to such high filling level products may reduce the softness of the product, particularly if the high levels of fiber are added to the casing. Higher fiber levels in the filling and/or casing can also degrade taste and/or deliver a texture experience that is not desirable (e.g., to deliver a filing texture that is too stiff for a palatable consumer experience.

In some embodiments, the addition of fiber under the appropriate conditions can deliver consumer palatable dual-texture dough-based filled products over a prolonged shelf-life of the product. Indeed, in some embodiments, the foodstuff's impact on moisture migration and equilibration in order to maintain its dual-texture for a prolonged period of time may be related to the inclusion of fiber, such as a fiber blend in the dough-based portion and/or the filling portion. Without wishing to be bound by theory, it is believed that selection of an appropriate fiber component and fiber level may help to retain the moisture in the respective portions, prevent the moisture from migrating and/or control moisture equilibrium between a filling and a casing. In some embodiments, moisture can migrate between the dough-based portion and the filling portion and equilibrate at a point which still maintains a dual texture of the foodstuff, due to unique properties resulting from factors such as: i) the type of fiber used; ii) the ratio of insoluble to soluble fiber used; ii) the distribution of the fiber (e.g., in the casing, the filling, or both); iv) the relative amount of fiber in the casing versus the filling; iv) the filling level of the product; v) the fiber level in the product; and vi) combinations of one or more of the foregoing. The foodstuff, the fiber component, and the ability to maintain a dual texture throughout the shelf life of the foodstuff will be discussed in further detail below.

### Fiber Blend

A foodstuff includes a fiber blend in the dough-based portion and the filling portion of the foodstuff. The foodstuff's ability to deliver on appropriate texture, taste and fiber level (e.g., to meet a "good source of fiber" health claim or higher) for a prolonged period of time may be affected by one or more factors related to the included fiber in the product, including: i) the total amount of fiber blend in the foodstuff; ii) the apportionment of the fiber blend(s) in the dough-based portion versus the filling portion of the foodstuff; iii) the apportionment of the total amount of fiber per serving in the dough-based portion versus the filling portion of the foodstuff; iv) the ratio of soluble to insoluble fiber in the fiber blend; v) the specific types and amounts of fibers included in the soluble fiber portion of the fiber blend; vi) the specific types and amounts of fibers included in the insoluble fiber portion of the fiber blend and vii) combinations of one or more of the foregoing. Embodiments of some fiber blends of the present invention may be desirable because, in addition to affecting moisture migration, moisture equilibrium, and/or relative humidity of the product, the fiber blends do not negatively impact the flavor and/or texture of the dough-based component or the filling component of the foodstuff.

In some embodiments, a fiber blend may contain one or more types of fiber. In some embodiments, the fiber blend in the dough-based portion and in the filling portion of the foodstuff may be the same or substantially the same fiber blend. In other embodiments, the fiber blend in the dough-based portion and in the filling portion of the foodstuff may be formulated differently. As used herein, unless specified otherwise the term fiber blend can refer to either the dough-based portion fiber blend or the filling portion fiber blend.

The soluble fiber consists of resistant maltodextrin, soluble corn fiber, or a combination thereof. The insoluble fiber consists of oat fiber. In some embodiments, the fiber blend consists of soluble and insoluble fiber in a ratio of soluble to insoluble fiber of 9:1 to 0.43:1; about 8:1 to about 0.5:1; about 7:1 to about 0.6:1; about 6:1 to about 0.8:1; about 5:1 to about 1:1; about 4:1 to about 1.2:1; about 3:1 to about 1.4:1; about 3:1 to about 1:1; about 2.3:1 to about 1.5:1; about 2:1 to about 1.8:1; 9:1; about 8:1; about 7:1; about 6:1; about 5:1; about 4:1; about 3:1; about 2.3:1; about 2:1; about 1:1; about 1.8:1; about 1.5:1; about 1.4:1; about 1.2:1; about 0.8:1; about 0.6:1; about 0.5:1; or 0.43:1.

In some embodiments, the soluble fiber in the fiber blend includes a combination of more than one type of soluble fiber. For example, in one embodiment, the soluble fiber in the fiber blend consists of soluble corn fiber and resistant maltodextrin. In some embodiments, the soluble fiber in the fiber blend consists of soluble corn fiber and resistant maltodextrin in a ratio of soluble corn fiber to resistant maltodextrin of about 1:1 to about 9:1; about 2:1 to about 8:1; about 3:1 to about 7:1; about 4:1 to about 6:1; about 1:1; about 2:1; about 3:1; about 4:1; about 5:1; about 6:1; about 7:1; about 8:1; or about 9:1.

In some embodiments, the foodstuff includes a total amount of fiber per serving of about 1 g to about 7 g; about 1.5 g to about 6.5 g; about 2 g to about 6 g; about 2.5 g to about 5.5 g; about 2.5 g to about 5 g; about 3 g to about 4.5 g; about 1 g; about 1.5 g; about 2 g; about 2.5 g; about 3 g; about 3.5 g; about 4 g; about 4.5 g; about 5 g; about 5.5 g; about 6 g; about 6.5 g; or about 7 g. In some embodiments, a serving is about 20 g to about 40 g; about 25 g to about 35 g; about 20 g; about 25 g; about 30 g; about 35 g; or about 40 g. In some embodiments, the foodstuff includes fiber in an amount of 8 wt% to 17 wt% of the foodstuff; about 9 wt% to about 16 wt% of the foodstuff; about 10 wt% to about 15 wt% of the foodstuff; about 11 wt% to about 14 wt% of the foodstuff; about 12 wt% to about 13 wt% of the foodstuff; 8 wt% of the foodstuff; about 9 wt% of the foodstuff; about 10 wt% of the foodstuff; about 11 wt% of the foodstuff; about 12 wt% of the foodstuff; about 13 wt% of the foodstuff; about 14 wt% of the foodstuff; about 15 wt% of the foodstuff; about 16 wt% of the foodstuff; or 17 wt% of the foodstuff

In some embodiments, the dough-based portion of the foodstuff contains 40 wt% to 60 wt% of the total fiber of the foodstuff; about 45 wt% to about 55 wt% of the total fiber of the foodstuff; 40 wt% of the total fiber of the foodstuff; about 45 wt% of the total fiber of the foodstuff; about 50 wt% of the total fiber of the foodstuff; about 55 wt% of the total fiber of the foodstuff; or 60 wt% of the total fiber of the foodstuff. Likewise, in some embodiments, the filling portion of the foodstuff contains 40 wt% to 60 wt% of the total fiber of the foodstuff; about 45 wt% to about 55 wt% of the total fiber of the foodstuff; 40 wt% of the total fiber of the foodstuff; about 45 wt% of the total fiber of the foodstuff; about 50 wt% of the total fiber of the foodstuff; about 55 wt% of the total fiber of the foodstuff; or 60 wt% of the total fiber of the foodstuff. In some embodiments, the fiber in the dough-based portion and the fiber in the filling portion is present in a ratio of fiber in the dough-based portion to fiber in the filling portion of about 40:60 to about 60:40; about 45:55 to about 55:45; about 40:60; about 45:55; about 50:50; about 55:45; or about 60:40.

In some embodiments, the dough-based portion fiber blend and the filling portion fiber blend are present in the foodstuff in a ratio of dough-based portion fiber blend to filling portion fiber blend of about 35:65 to about 65:35; about 40:60 to about 60:40; about 45:55 to about 55:45; about 35:65; about 40:60; about 45:55; about 50:50; about 55:45; about 60:40; or about 65:35.

In some embodiments, the filling component fiber blend is present in the filling portion in an amount of 1 wt% to about 14 wt% of the filling portion; about 2 wt% to about 13 wt% of the filling portion; about 3 wt% to about 12 wt% of the filling portion; about 4 wt% to about 11 wt% of the filling portion; about 5 wt% to about 10 wt% of the filling portion; about 6 wt% to about 9 wt% of the filling portion; about 7 wt% to about 8 wt% of the filling portion; 1 wt% of the filling portion; about 2 wt% of the filling portion; about 3 wt% of the filling portion; about 4 wt% of the filling portion; about 5 wt% of the filling portion; about 6 wt% of the filling portion; about 7 wt% of the filling portion; about 8 wt% of the filling portion; about 9 wt% of the filling portion; about 10 wt% of the filling portion; about 11 wt% of the filling portion; about 12 wt% of the filling portion; about 13 wt% of the filling portion; or about 14 wt% of the filling portion.

In some embodiments, the dough-based portion fiber blend is present in the dough-based portion in an amount of 1 wt% to about 14 wt% of the dough-based portion; about 2 wt% to about 13 wt% of the dough-based portion; about 3 wt% to about 12 wt% of the dough-based portion; about 4 wt% to about 11 wt% of the dough-based portion; about 5 wt% to about 10 wt% of the dough-based portion; about 6 wt% to about 9 wt% of the dough-based portion; about 7 wt% to about 8 wt% of the dough-based portion; 1 wt% of the dough-based portion; about 2 wt% of the dough-based portion; about 3 wt% of the dough-based portion; about 4 wt% of the dough-based portion; about 5 wt% of the dough-based portion; about 6 wt% of the dough-based portion; about 7 wt% of the dough-based portion; about 8 wt% of the dough-based portion; about 9 wt% of the dough-based portion; about 10 wt% of the dough-based portion; about 11 wt% of the dough-based portion; about 12 wt% of the dough-based portion; about 13 wt% of the dough-based portion; or about 14 wt% of the dough-based portion.

In one exemplary embodiment, the foodstuff includes a total fiber content per serving of about 2.5 g to about 5.0 g of fiber; a dough-based portion including 40 wt% to 60 wt% of the total fiber content, with a dough-based portion fiber blend having soluble fiber and insoluble fiber in a ratio of 9:1 to 0.43:1; and a filling portion fiber blend including soluble fiber and insoluble fiber in a ratio of 9:1 to 0.43:1.

### Foodstuff

The foodstuff's ability to resist moisture migration, as well as its ability to provide and maintain a desirable dual-texture for a prolonged period of time may also be affected by one or more factors related to properties of the foodstuff including, for example, the total relative humidity of the foodstuff and/or the amount of dough-based portion and filling portion in the foodstuff.

In some embodiments, the foodstuff has a relative humidity of below 0.7; below about 0.6; 0.5 to 0.7; 0.5; about 0.6; or 0.7. Such relative humidity values may correlate with a foodstuff having a desirable amount of high water activity soft filling, while still having a crispy, lower water activity dough-based portion to provide a dual-textured product.

The proportions of dough-based portion and filling portion may be selected to provide a desired taste and texture profile. In some embodiments, the foodstuff includes a filling portion in an amount of 35 wt% to about 55 wt% of the foodstuff; about 40 wt% to about 50 wt% of the foodstuff; 35 wt% of the foodstuff; about 40 wt% of the foodstuff; about 45 wt% of the foodstuff; about 50 wt% of the foodstuff; about 55 wt% of the foodstuff; or 60 wt% of the foodstuff. In some embodiments, the foodstuff includes a dough-based portion in an amount of about 45 wt% to 65 wt% of the foodstuff; about 50 wt% to about 60 wt% of the foodstuff; about 40 wt% of the foodstuff; about 45 wt% of the foodstuff; about 50 wt% of the foodstuff; about 55 wt% of the foodstuff; about 60 wt% of the foodstuff; or 65 wt% of the foodstuff. In some embodiments, a percentage of filling portion towards the higher end of the range results in a foodstuff having a softer-textured dough-based portion and higher flavor from the filling portion. In some embodiments, a percentage of filling portion towards the lower end of the range results in a foodstuff having a crisper-textured dough-based portion and less flavor from the filling portion.

### Dough-based portion

In some embodiments, a dough-based portion may be prepared in a process that includes combining flour (e.g., a starch-based flour such as whole wheat flour, enriched flour, corn flour, potato flour, rice flour, oat flour, barley flour, and the like), water, salt, sweetener, and other additives.

In some embodiments, additional ingredients may be included in the dough-based portion based on, for example, desired taste, nutrition, texture, and visual appeal of the dough-based portion. Exemplary additional ingredients include, but are not limited to, whole grains, non-whole grains, flavor and/or texture inclusions, dough salt, protein, colors, fruits, vegetables, cheese, flavors, soy pieces, meat pieces, seeds, nuts, and combinations thereof.

In some embodiments, the dough-based portion includes additional ingredients such as sweeteners or flavors, to produce a desired taste. In some embodiments, additional ingredients, such as starch, may be included to produce a desired texture. In some embodiments, the dough-based portion includes ingredients such as, but not limited to, sugar, pre-gelatinized starch, potato starch, and/or additives such as sodium acid pyrophosphate, calcium phosphate monobasic, and/or sodium bicarbonate.

In addition to, or in substitution of one or more of the foregoing, the dough-based portions employed in some embodiments of the present invention may include other additives conventionally employed in crackers and cookies. Such additives may include, for example, dairy by-products, enzyme modified milk powder, whey, egg or egg by-products, cocoa, peanut butter, vanilla or other flavorings, flour substitutes or bulking agents, such as polydextrose, hemi-cellulose, microcrystalline cellulose, mixtures thereof, and the like, as well as inclusions or particulates such as nuts, raisins, coconut, flavored chips such as chocolate chips, butterscotch chips, white chocolate chips, peanut butter chips, caramel chips, and the like in conventional amounts. In embodiments of the invention, these additives, such as chocolate chips or other flavor chips, may be employed in amounts up to about 25% by weight, for example from about 10% by weight to about 20% by weight, based upon the weight of the dough-based portion.

A source of protein, which is suitable for inclusion in baked goods, may be included in the dough-based portions of the present invention. In one embodiment, the inclusion of protein promotes Maillard browning. The source of protein may include non-fat dry milk solids, dried or powdered eggs, mixtures thereof, and the like. Also, protein concentrates and isolates from various sources, such as rice, soy, and/or dairy, may be included in the dough-based portion. The amount of the proteinaceous source may, for example, range up to about 20 wt%, based upon the weight of the dough-based portion.

The dough-based portions of the present invention may contain a leavening system. The leavening system may be included in an amount of up to about 2.5 wt% of the dough, based upon the weight of the dough before baking. Exemplary chemical leavening agents or pH-adjusting agents which may be used include alkaline materials and acidic materials such as sodium bicarbonate, ammonium bicarbonate, calcium acid phosphate, sodium acid pyrophosphate, diammonium phosphate, tartaric acid, mixtures thereof, and the like. The leavening agent may include yeast alone or in combination with chemical leavening agents.

Enzymes conventionally used in cracker production, such as amylases and proteases, may be included in the dough-based portion in conventional amounts in embodiments of the present invention.

The dough-based portion of the present invention may include antimycotics or preservatives, such as calcium propionate, potassium sorbate, sorbic acid, and the like. Exemplary amounts may range up to about 1% by weight of the dough-based portion, to assure microbial shelf-stability. In some embodiments, the dough-based portion of the present invention has a low water activity and therefore does not include or require preservatives.

Emulsifiers may be included in effective, emulsifying amounts in the dough-based portions of the present invention. Exemplary emulsifiers which may be used include mono- and di-glycerides, polyoxyethylene sorbitan fatty acid esters, lecithin, stearoyl lactylates, and mixtures thereof. Exemplary of the polyoxyethylene sorbitan fatty acid esters which may be used are water-soluble polysorbates such as polyoxyethylene (20) sorbitan monostearate (polysorbate 60), polyoxyethylene (20) sorbitan monooleate (polysorbate 80), and mixtures thereof. Examples of natural lecithins which may be used include those derived from plants such as soybean, rapeseed, sunflower, or corn, and those derived from animal sources such as egg yolk. Soybean-oil-derived lecithins are preferred. Exemplary of the stearoyl lactylates are alkali and alkaline stearoyl lactylates such as sodium stearoyl lactylate, calcium stearoyl lactylate, DATEM and mixtures thereof. Exemplary amounts of the emulsifier which may be used range up to about 3% by weight of the dough-based portion.

In some embodiments, a dough is admixed with one or more processing aids before baking. In some embodiments, processing aids may be desirable to improve the consistency of the dough for forming, for example, a casing or outer layer of the foodstuff. For example, oil may be admixed to the dough as a processing aid. In addition to providing physical benefits to processing, oil may contribute improved taste to the finished product. Oils useful in the present methods and products may include high oleic canola oil, soybean oil, safflower oil, and/or solid fats such as shortening.

The inclusion of any amount of any additional ingredients, such as those described above, to the dough before baking may be optimized according to the desired taste and texture of the baked dough-based portion. For example, leavening and starch may be included in order to produce a blistering effect of the dough-based portion upon baking.

Once all ingredients are incorporated, the dough may be formed into the dough-based portion by, for example, dough extrusion, coextrusion with a filling, sheeting or any other known method, as discussed herein. In some embodiments, the dough-based portion exhibits desirable strength characteristics such as elasticity and/or viscosity.

### Filling Portion

As discussed above, foodstuffs of the present invention may include a soft filling portion. In some embodiments, a soft filling portion may include commercially available fillings. The soft filling portion may be savory or sweet. In some embodiments, a suitable soft filling portion is bake-stable. A filling portion suitable for the present invention may have a soft texture. The filling portion maintains its soft texture after baking, and maintains its soft texture throughout the shelf life of the foodstuff product, wherein the shelf life is at least one month.

The filling employed may be produced in a conventional manner and may generally include invert sugar, sugar or sucrose, apple powder, fruit puree and water. Modified food starch and gums, such as pectin, may be added to aid texture and control spread in the oven during baking. Natural and artificial flavor, food acids and salt may be used as flavorings. Glycerin may also be used as a humectant to soften filler texture and control relative humidity (RH) or water activity (Aw). A preservative such as sodium benzoate may also be used in the filling composition. In some embodiments, the edible filling or filler, includes commercially available fillers, that are modified or selected to meet one or more of the the criteria set forth herein and the following criteria for moisture, relative humidity and bakability:

| **Filling Parameter** | **Range** | **Preferred Range** | **Example** |
|---|---|---|---|
| Erh A_{w} | 0.6-0.7% | 0.62-0.66% | 0.64% |
| Bake Spread* | 5.1-6.4 cm (2-2.5 inches) | 5.3-5.8 cm (2.1-2.3 inches) | 5.6 cm (2.2 inches) |
| pH | 2.5-3.5 | 2.8-3.2 | 3.0 |
| Brix (solids) | 72-80% | 74-78% | 76.5% |
| Moisture | 14-30% | 19-25% | 21.8% |

| | | | |
|---|---|---|---|
| *The bake spread test consists of cooking the filler for 10 minutes at 210°C in a 35 mm diameter ring that is 5 mm high, and then measuring the distance and inputting into the formula: Bake spread = 100 - ((P - 3.5)/3.5) ^{∗} 100, where P is the average baked diameter from duplicate tests. | | | |

Exemplary fillings which may be employed are one or more fruit fillings, such as apple, apple-cinnamon, strawberry, raspberry, mixed berry, peach, cherry, banana, and orange fillings, vegetable fillings, such as broccoli, cauliflower, carrot, green bean, and mixed vegetable fillings, cheese fillings, meat fillings, peanut butter fillings, jam fillings, and jelly fillings.

In some embodiments, a suitable filling has a high water activity. In some embodiments, a suitable filling has relative humidity of 0.6 to 0.8; 0.6; about 0.7; or 0.8.

In some embodiments, a filling portion is bake-stable in that the filling portion does not boil during baking.

### Preparation

A foodstuff of the present invention may include a dough-based portion and a filling portion. Multiple variations of combinations of dough-based portion(s) and filling portion(s) are possible. The dough-based portion and the filling portion may be combined in the form of a casing and filling respectively. The foodstuff of the present invention may also be in the form of a sandwich, an enclosed pocket, a layer of exposed filling portion on the dough-based portion, or any other suitable combination of a dough-based portion and a filling portion.

Before baking, a filling portion may be added to the dough in any suitable manner. In some embodiments, the dough is extruded or sheeted. In some embodiments, the dough may be extruded, such as under low pressure and shear conditions. In some embodiments, the filling and dough can be coextruded. In some embodiments, the filling and dough are extruded in a cooking extruder. The coextruded dough and filling may be cut or crimped to form individual unbaked pieces. In some embodiments, the pieces are cut or crimped in such a way that the dough-based portion completely surrounds the filling portion.

In some embodiments, a filling portion is deposited on a layer of dough. In some embodiments, a filling is sandwiched between two layers of dough. In some embodiments, the filling is exposed on the edges of the foodstuff. In some embodiments, the filling is completely enclosed within the dough. In some embodiments, the dough is crimped to partially or completely enclose the filling.

In some embodiments, the assembled foodstuff does not include an added barrier layer (e.g., a fat migration barrier, a moisture migration barrier) between the filling portion and the dough.

In some embodiments, the filling portion may be added to the dough-based portion after baking. The filling portion may be added to the baked dough-based portion in any suitable manner.

Assembled foodstuff of the present invention may be dried and/or baked using any suitable oven or conventional drying method. In some embodiments, the foodstuff is assembled in a cooking extruder and is subsequently dried. Drying may be conducted by any suitable method, including convection or dielectric dryer.

In some embodiments, the foodstuff is dried at temperatures of about 38°C (about 100°F) to about 204°C (about 400°F) and times of about 5 minutes to about 30 minutes. In some embodiments, assembled foodstuffs are baked at a temperature of about 218°C (about 425°F) to about 274°C (about 525°F), or about 232°C (about 450°F) to about 260°C (about 500°F). In some embodiments, the assembled foodstuffs are baked for about 3 to about 8 minutes, about 4 minutes to about 7 minutes, or about 5 minutes to about 6 minutes.

In some embodiments, the foodstuffs are dried and/or baked to produce a foodstuff having a moisture content of 5% to 15%; about 8.5% to about 10%, about 1%; about 5%; about 8.5%; about 10%; about 12.5%; about 15%; or about 20%, as measured by the Karl Fischer analysis.

In some embodiments, after drying or baking, additional oil and/or salt/seasoning may be applied.

By way of example reference is now made to Figures 1-2. Foodstuff 100 may be prepared according to methods described herein. Foodstuff 100 includes dough-based casing 110. Dough-based casing 110 has a crispy, crunchy texture, and is prepared according the methods described herein. Dough-based casing 110 completely encloses filling 200, as described herein. Filling 200 has a soft texture, and is in direct contact with dough-based casing 110.

Foodstuff 100 may have a rounded, pillow shape. As shown in Figures 1-2, foodstuff 100 exhibits a rounded, pillow shape, with casing top portion 120 and casing bottom portion 130 having convex shapes.

### Dual Textured Foodstuff

The baked foodstuff of the present invention exhibits a dual texture including a crispy dough-based portion, such as a casing, and a soft filling portion. In some embodiments, the dough-based portion exhibits a cracker- or pretzel-like texture. The dual texture is maintained throughout the shelf life of the foodstuff, wherein the shelf life is at least 1 month. In some embodiments, a baked foodstuff maintains its dual texture for for at least 2 months, for at least 3 months for at least 6 months, for at least 1 year and/or for at least 2 years.

In some embodiments, the properties of the foodstuff affect moisture equilibrium between the dough-based portion and the filling portion, in order to maintain the dual texture of the foodstuff. In some embodiments, moisture can migrate between the dough-based portion and the filling portion and equilibrate at a point which still maintains a dual texture of the foodstuff, due to unique properties resulting from factors such as: i) the type of fiber used; ii) the ratio of insoluble to soluble fiber used; ii) the distribution of the fiber; iv) the relative amount of fiber in the casing versus the filling; iv) the filling level of the product; v) the fiber level in the product; and vi) combinations of one or more of the foregoing. As a result, the inclusion of and the nature of the fiber blend in the filling portion and/or the dough-based portion of the foodstuff may affect the equilibrium distribution of moisture between dough-based portion and filling portion of the foodstuff during preparation, drying, and/or throughout a shelf-life of the foodstuff. The dough-based portion of the foodstuff may affect moisture migration from the adjoining filling portion such that the moisture equilibrates at a point where a dual-texture is maintained even when the filling portion has a high relative humidity of 0.6 to 0.8, despite the foodstuff including a high percentage of filling of 35 wt% to 60 wt% of the foodstuff, and despite the foodstuff having an overall relative humidity of 0.5 to 0.7. While not wishing to be bound by theory, the inclusion of the fiber blend in the dough-based portion may help to retain crispiness by enhancing the development of a matrix, such as a wall structure around air cells.

A foodstuff prepared from a dough-based portion and a filling portion according to embodiments of the present invention may provide maintenance of acceptable moisture levels in the filling portion during baking and throughout a shelf-life of the foodstuff. Such maintenance of moisture levels may allow for a more distinct dual texture, with the filling being soft and moist and the dough-based portion being crispier and drier. The texture of the foodstuff may be characterized, for example, by determining the amount of work, defined as force (g^{∗}millimeter per sec²), to penetrate the dough-based portion.

### Examples

### Example 1

A dough was prepared from the following formulation:

| **INGREDIENTS** | **Wt%** |
|---|---|
| Flour | 65% to 95% |
| Granulated sugar | 0% to 20% |
| Dough salt | 0% to 2% |
| Calcium carbonate | 0% to 2% |
| Soluble corn fiber | 5% |
| Resistant maltodextrin | 1% |
| Oat fiber | 2% |
| Water | 5% to 50% |
| | 100.00% |

A filling was prepared according to the following formulation:

| **Ingredients** | **Wt (kg (lb))** |
|---|---|
| Sugar (including syrups) | 90.7 to 317.5 (200 to 700) |
| Fruit (powder, puree, fiber) | 4.5 to 90.7 (10 to 200) |
| Soluble corn fiber | 24.2 (53.4) |
| Water | 6.8 to 45.4 (15 to 100) |
| starch | 9.1 to 45.4 (20 to 100) |
| Oat fiber | 10.6 (23.4) |
| Texturizers, acidulants, preservatives | 4.5 to 22.7 (10 to 50) |
| Resistant maltodextrin | 5.5 (12.1) |
| Natural/artificial color and flavors | 0 to 9.1 (0 to 20) |
| Salt | 2.5(5.6) |

The dough and filling were coextruded in a ratio of 55% dough and 45% filling to product an unbaked foodstuff. The baked product displayed desirable dual texture (having a soft moist filling and a crispy dough-based casing) that resisted moisture migration.

### Example 2

Dough-based portions were prepared and tested with different fiber blends, according to the formulations below:

| **Formula 1** | **% of Fibers** | **Ratio of Soluble to Insoluble Fiber** |
|---|---|---|
| Soluble corn fiber | 61 | 3 |
| Resistant maltodextrin | 14 | |
| Oat fiber | 25 | 1 |

| **Formula 2** | | Ratio |
|---|---|---|
| Soluble corn fiber | 90 | 9 |
| Oat fiber | 10 | 1 |

| **Formula 3** | | Ratio |
|---|---|---|
| Soluble corn fiber | 30 | 0.43 |
| Oat fiber | 70 | 1 |
| | 1.00 | |

The ratios listed in the table above represent the ratio of soluble fiber to insoluble fiber. Formula 1 included soluble fiber (soluble corn fiber and resistant maltodextrin) in a ratio of 3:1. Formula 2 included soluble fiber to insoluble fiber in a ratio of 9:1, and Formula 3 included soluble fiber to insoluble fiber in a ratio of 0.43:1.

Products for formulae 1, 2 and 3 described above were analyzed in a qualitative panel. The panel found that the texture of the foodstuffs prepared with the fiber blends of Formulae 1, 2, and 3 were each deemed acceptable, as they exhibited a dual texture having a crispy dough-based portion and a soft filling.

The results also demonstrated that the fiber ranges impact the texture and processing of the dough-based portion. Formula 3 resulted in a foodstuff with a dough-based portion that was softer, while Formula 2 resulted in a foodstuff with a dough-based portion that was drier. Formula 1 resulted in a foodstuff with a dough-based portion that was in between the textures of the foodstuffs including Formula 2 and Formula 3.

### Example 3

Foodstuffs were prepared with varying fiber blend levels in the filling and in the dough, and with varying amounts of filling in the foodstuff, as follows:

| **Run** | **Filler Fiber (%)** | **Casing Fiber (%)** | **Filler Level (%)** |
|---|---|---|---|
| 1 | 3.6 | 0 | 50 |
| 2 | 0 | 3.2 | 35 |
| 3 | 4 | 4 | 35 |
| 4 | 1 | 7 | 50 |
| 5 | 0 | 0 | 50 |
| 6 | 2.5 | 2.5 | 50 |
| 7 | 6 | 0 | 35 |
| 8 | 2.5 | 4 | 35 |
| 9 | 0 | 4 | 50 |
| 10 | 0 | 8 | 35 |
| 11 | 6 | 2 | 50 |
| 12 | 1.8 | 0 | 35 |

| | | | |
|---|---|---|---|
| Runs 1, 2, 4, 5 and 7-12 are not in accordance with the present invention. | | | |

It was observed that the foodstuffs with less filling had crispier dough-based portions and less taste from the filling, while the foodstuffs with more filling had less crispy dough-based portions and fuller flavor from the filling. Additionally, the foodstuffs including fiber in both the filling and the dough-based portion demonstrated a crispier texture, which remained crispier over time.

### Example 4

Foodstuffs were prepared with varying fiber blend levels in the filling and in the dough, and with 40-45% filling in the foodstuff, as follows:

| | **Factor 1** | **Factor 2** | **Factor 3** | **No Coating** |
|---|---|---|---|---|
| **Run** | **Filling Fiber** | **Casing Fiber** | **Filling Amt** | **Piece RH** |
| 1 | 0 | 8 | 45 | 0.513 |
| 2 | 8 | 0 | 45 | 0.53 |
| 3 | 4 | 4 | 42.5 | 0.522 |
| 4 | 0 | 0 | 40 | 0.515 |
| 5 | 0 | 8 | 40 | 0.521 |
| 6 | 8 | 0 | 40 | 0.487 |
| 7 | 0 | 0 | 45 | 0.505 |
| 8 | 8 | 8 | 45 | 0.53 |
| 9 | 8 | 8 | 40 | 0.52 |
| 10 | 4 | 4 | 42.5 | 0.515 |
| 11 | Add-on | Add-on | Add-on | 0.532 |
| 12 | Add-on | Add-on | Add-on | 0.529 |

| | | | | |
|---|---|---|---|---|
| Runs 1, 2, and 4-7 are not in accordance with the present invention. | | | | |

It was observed that the foodstuffs with less filling had crispier dough-based portions and less taste from the filling, while the foodstuffs with more filling had less crispy dough-based portions and fuller flavor from the filling. Additionally, the foodstuffs including fiber in both the filling and the dough-based portion demonstrated a crispier texture, which remained crispier over time. Sample 8 demonstrated the best combination of a full flavor and crispy dough-based portion.

## Claims

1. A dual-textured foodstuff comprising:
(a) a total fiber content of 8 wt% to 17 wt% of the dual-textured foodstuff;
(b) a baked dough-based component including:
(i) a dough-based component fiber blend consisting of soluble fiber and insoluble fiber in a ratio of 9:1 to 0.43:1, wherein the soluble fiber consists of corn fiber and, optionally, resistant maltodextrin, and the insoluble fiber consists of oat fiber, wherein the dough-based component includes the dough-based fiber blend in an amount of 1 to 20 wt% of the dough-based component;
(ii) 40 wt% to 60 wt% of the total fiber content; and
(iii) a crispy texture throughout the shelf life of the foodstuff, wherein the shelf life is at least one month;
(c) a baked filling component present in an amount of 35 wt% to 60 wt% of the foodstuff, the baked filling component being in direct contact with the baked dough-based component, and having:
(i) a soft texture throughout the shelf life of the foodstuff, wherein the shelf life is at least one month;
(ii) a relative humidity of 0.6 to 0.8;
(iii) a filling component fiber blend consisting of soluble fiber and insoluble fiber in a ratio of 9:1 to 0.43:1, wherein the soluble fiber consists of corn fiber and resistant maltodextrin and the insoluble fiber consists of oat fiber, wherein the filling component includes the filling component fiber blend in an amount of 1 to 20 wt% of the filling component; and
(iv) 40 wt% to 60 wt% of the total fiber content;
(d) an overall relative humidity of 0.50 to 0.70;
(e) a moisture content of 5% to 15%, as measured by a Karl Fischer analysis.

2. The dual-textured foodstuff of claim 1, wherein the filling component has a higher moisture content than the dough-based component.

3. The dual-textured foodstuff of claim 1, wherein the dough-based component completely encloses the filling component.

4. The dual-textured foodstuff of claim 1, wherein the baked dough-based component is an extruded dough-based component.

5. A method for producing a dual-textured foodstuff comprising:
(a) forming an unbaked dough comprising a dough-based component fiber blend that consists of soluble fiber and insoluble fiber in a ratio of 9: 1 to 0.43: 1, wherein the soluble fiber consists of corn fiber and, optionally, resistant maltodextrin, and the insoluble fiber consists of oat fiber and the unbaked dough includes 40 wt% to 60 wt% of a total fiber content of the dual-textured foodstuff;
(b) adding a filling component in direct contact with the unbaked dough to form an unbaked foodstuff, the filling component having a relative humidity of 0.6 to 0.8, and the filling component including a filling component fiber blend consisting of soluble fiber and insoluble fiber in a ratio of 9:1 to 0.43: 1, wherein the soluble fiber consists of corn fiber and, optionally, resistant maltodextrin, and the insoluble fiber consists of oat fiber and the filling component includes 40 wt% to 60 wt% of the total fiber content of the dual-textured foodstuff;
(c) baking the unbaked foodstuff to obtain a foodstuff having a dual texture including:
(i) a baked filling component present in an amount of 35 wt% to 60 wt% of the dual-textured foodstuff, the baked filling component having a soft texture maintained throughout the shelf life of the foodstuff, wherein the filling component includes the filling component fiber blend in an amount of 1 to 20 wt% of the filling component;
(ii) a baked dough-based component having a crispy texture maintained throughout the shelf life of the foodstuff, wherein the shelf life is at least one month, wherein the dough-based component includes the dough-based fiber blend in an amount of 1 to 20 wt% of the dough-based component;
(iii) a total fiber content of 8 wt% to 17 wt% of the foodstuff;
(iv) an overall relative humidity of 0.50 to 0.70;
(v) a moisture content of 5% to 15%, as measured by a Karl Fischer analysis.

6. The dual -textured foodstuff of claim 1 or the method of claim 5, wherein the dough-based component fiber blend consists of soluble fiber and insoluble fiber in a ratio of 3:1 to 1:1, preferably in a ratio of 2:1.

7. The dual-textured foodstuff of claim 1 or the method of claim 5, wherein the filling component fiber blend consists of soluble fiber and insoluble fiber in a ratio of 3:1 to 1:1, preferably in a ratio of 2:1.

8. The dual-textured foodstuff of claim 1 or the method of claim 5, wherein the soluble fiber of the dough-based component fiber blend consists of corn fiber and resistant maltodextrin, wherein the corn fiber and the resistant maltodextrin of the dough-based component fiber blend are in a ratio of 1:1 to 9:1.

9. The dual-textured foodstuff of claim 1 or the method of claim 5, wherein the soluble fiber of the filling component fiber blend consists of corn fiber and resistant maltodextrin, wherein the corn fiber and the resistant maltodextrin of the dough-based component fiber blend are in a ratio of 1:1 to 9:1.

10. The method of claim 5, comprising completely enclosing the filling component within the dough.

11. The method of claim 5, comprising coextruding the dough and the filling.

12. The method of claim 5, wherein forming an unbaked foodstuff comprises extruding.

## Patentansprüche

1. Doppelt texturiertes Nahrungsmittel, umfassend:
(a) einen Gesamtfasergehalt von 8 Gew.-% bis 17 Gew.-% des doppelt texturierten Nahrungsmittels;
(b) eine gebackene Komponente auf Teigbasis einschließlich:
(i) einer Fasermischung der Komponente auf Teigbasis, die aus löslichen Fasern und unlöslichen Fasern in einem Verhältnis von 9:1 bis 0,43:1 besteht, wobei die löslichen Fasern aus Maisfasern und optional aus widerstandsfähigem Maltodextrin bestehen und die unlöslichen Fasern aus Haferfasern bestehen, wobei die Komponente auf Teigbasis die Fasermischung auf Teigbasis in einer Menge von 1 bis 20 Gew.-% der Komponente auf Teigbasis enthält;
(ii) 40 Gew.-% bis 60 Gew.-% des Gesamtfasergehalts; und
(iii) einer knusprigen Textur während der gesamten Haltbarkeitsdauer des Nahrungsmittels, wobei die Haltbarkeitsdauer mindestens einen Monat beträgt;
(c) eine gebackene Füllkomponente, die in einer Menge von 35 Gew.-% bis 60 Gew.-% des Nahrungsmittels vorliegt, wobei die gebackene Füllkomponente in direktem Kontakt mit der gebackenen Komponente auf Teigbasis steht und aufweist:
(i) eine weiche Textur während der gesamten Haltbarkeitsdauer des Nahrungsmittels, wobei die Haltbarkeitsdauer mindestens einen Monat beträgt;
(ii) eine relative Feuchtigkeit von 0,6 bis 0,8;
(iii) eine Fasermischung der Füllkomponente, die aus löslichen Fasern und unlöslichen Fasern in einem Verhältnis von 9:1 bis 0,43:1 besteht, wobei die löslichen Fasern aus Maisfasern und widerstandsfähigem Maltodextrin bestehen und die unlöslichen Fasern aus Haferfasern bestehen, wobei die Füllkomponente die Fasermischung der Füllkomponente in einer Menge von 1 bis 20 Gew.-% der Füllkomponente enthält; und
(iv) 40 Gew.-% bis 60 Gew.-% des Gesamtfasergehalts;
(d) eine Gesamtfeuchtigkeit von 0,50 bis 0,70;
(e) einen Feuchtigkeitsgehalt von 5 % bis 15 %, gemessen durch eine Karl-Fischer-Analyse.

2. Doppelt texturiertes Nahrungsmittel nach Anspruch 1, wobei die Füllkomponente einen höheren Feuchtigkeitsgehalt als die Komponente auf Teigbasis aufweist.

3. Doppelt texturiertes Nahrungsmittel nach Anspruch 1, wobei die Komponente auf Teigbasis die Füllkomponente vollständig umschließt.

4. Doppelt texturiertes Nahrungsmittel nach Anspruch 1, wobei die gebackene Komponente auf Teigbasis eine extrudierte Komponente auf Teigbasis ist.

5. Verfahren zum Herstellen eines doppelt texturierten Nahrungsmittels, umfassend:
(a) Bilden eines ungebackenen Teigs, der eine Fasermischung der Komponente auf Teigbasis umfasst, die aus löslichen Fasern und unlöslichen Fasern in einem Verhältnis von 9: 1 bis 0,43: 1 besteht, wobei die löslichen Fasern aus Maisfasern und optional aus widerstandsfähigem Maltodextrin bestehen und die unlöslichen Fasern aus Haferfasern bestehen und der ungebackene Teig 40 Gew.-% bis 60 Gew.-% eines Gesamtfasergehalts des doppelt texturierten Nahrungsmittels enthält;
(b) Hinzufügen einer Füllkomponente in direktem Kontakt mit dem ungebackenen Teig zum Bilden eines ungebackenen Nahrungsmittels, wobei die Füllkomponente eine relative Feuchtigkeit von 0,6 bis 0,8 aufweist und die Füllkomponente eine Fasermischung der Füllkomponente enthält, die aus löslichen Fasern und unlöslichen Fasern in einem Verhältnis von 9:1 bis 0,43: 1 besteht, wobei die löslichen Fasern aus Maisfasern und optional aus widerstandsfähigem Maltodextrin bestehen und die unlöslichen Fasern aus Haferfasern bestehen und die Füllkomponente 40 Gew.-% bis 60 Gew.-% des Gesamtfasergehalts des doppelt texturierten Nahrungsmittels enthält;
(c) Backen des ungebackenen Nahrungsmittels, um ein doppelt texturiertes Nahrungsmittel zu erhalten, einschließlich:
(i) einer gebackenen Füllkomponente, die in einer Menge von 35 Gew.-% bis 60 Gew.-% des doppelt texturierten Nahrungsmittels vorliegt, wobei die gebackene Füllkomponente eine weiche Textur aufweist, die während der gesamten Haltbarkeitsdauer des Nahrungsmittels erhalten bleibt, wobei die Füllkomponente die Fasermischung der Füllkomponente in einer Menge von 1 bis 20 Gew.-% der Füllkomponente enthält;
(ii) einer gebackenen Komponente auf Teigbasis mit einer knusprigen Textur, die während der gesamten Haltbarkeitsdauer des Nahrungsmittels erhalten bleibt, wobei die Haltbarkeitsdauer mindestens einen Monat beträgt, wobei die Komponente auf Teigbasis die Fasermischung auf Teigbasis in einer Menge von 1 bis 20 Gew.-% der Komponente auf Teigbasis enthält;
(iii) eines Gesamtfasergehalts von 8 Gew.-% bis 17 Gew.-% des Nahrungsmittels;
(iv) einer Gesamtfeuchtigkeit von 0,50 bis 0,70;
(v) eines Feuchtigkeitsgehalts von 5 % bis 15 %, gemessen durch eine Karl-Fischer-Analyse.

6. Doppelt texturiertes Nahrungsmittel nach Anspruch 1 oder Verfahren nach Anspruch 5, wobei die Fasermischung der Komponente auf Teigbasis aus löslichen Fasern und unlöslichen Fasern in einem Verhältnis von 3:1 bis 1:1, vorzugsweise in einem Verhältnis von 2:1, besteht.

7. Doppelt texturiertes Nahrungsmittel nach Anspruch 1 oder Verfahren nach Anspruch 5, wobei die Fasermischung der Füllkomponente aus löslichen Fasern und unlöslichen Fasern in einem Verhältnis von 3:1 bis 1:1, vorzugsweise in einem Verhältnis von 2:1, besteht.

8. Doppelt texturiertes Nahrungsmittel nach Anspruch 1 oder Verfahren nach Anspruch 5, wobei die löslichen Fasern der Fasermischung der Komponente auf Teigbasis aus Maisfasern und widerstandsfähigem Maltodextrin bestehen, wobei die Maisfasern und das widerstandsfähige Maltodextrin der Fasermischung der Komponente auf Teigbasis in einem Verhältnis von 1:1 bis 9:1 vorliegen.

9. Doppelt texturiertes Nahrungsmittel nach Anspruch 1 oder Verfahren nach Anspruch 5, wobei die löslichen Fasern der Fasermischung der Füllkomponente aus Maisfasern und widerstandsfähigem Maltodextrin bestehen, wobei die Maisfasern und das widerstandsfähige Maltodextrin der Fasermischung der Komponente auf Teigbasis in einem Verhältnis von 1:1 bis 9:1 vorliegen.

10. Verfahren nach Anspruch 5, das vollständiges Umschließen der Füllkomponente in dem Teig umfasst.

11. Verfahren nach Anspruch 5, das Extrudieren des Teigs und der Füllung umfasst.

12. Verfahren nach Anspruch 5, wobei Bilden eines ungebackenen Nahrungsmittels Extrudieren umfasst.

## Revendications

1. Produit alimentaire à double texture comprenant :
(a) une teneur totale en fibres de 8 % en poids à 17 % en poids du produit alimentaire à double texture;
(b) un composant à base de pâte cuit incluant :
(i) un mélange de fibres de composant à base de pâte constitué de fibre soluble et de fibre insoluble dans un rapport de 9:1 à 0,43:1, dans lequel la fibre soluble est constituée de fibre de maïs et, éventuellement, de maltodextrine résistante, et la fibre insoluble est constituée de fibre d'avoine, dans lequel le composant à base de pâte inclut le mélange de fibres à base de pâte en une quantité de 1 à 20 % en poids du composant à base de pâte ;
(ii) 40 % en poids à 60 % en poids de la teneur totale en fibres ; et
(iii) une texture croustillante sur l'ensemble de la durée de conservation du produit alimentaire, dans lequel la durée de conservation est d'au moins un mois ;
(c) un composant de fourrage cuit présent en une quantité de 35 % en poids à 60 % en poids du produit alimentaire, le composant de fourrage cuit en contact direct avec le composant à base de pâte cuit, et ayant :
(i) une texture molle sur l'ensemble de la durée de conservation du produit alimentaire, dans lequel la durée de conservation est d'au moins un mois ;
(ii) une humidité relative de 0,6 à 0,8;
(iii) un mélange de fibres de composant de fourrage constitué de fibre soluble et de fibre insoluble dans un rapport de 9:1 à 0,43:1, dans lequel la fibre soluble est constituée de fibre de maïs et de maltodextrine résistante et la fibre insoluble est constituée de fibre d'avoine, dans lequel le composant de fourrage inclut le mélange de fibres de composant de fourrage en une quantité de 1 à 20 % en poids du composant de fourrage ; et
(iv) 40 % en poids à 60 % en poids de la teneur totale en fibres ;
(d) une humidité relative globale de 0,50 à 0,70 ;
(e) une teneur en humidité de 5 % à 15 %, telle que mesurée par une analyse Karl-Fischer.

2. Produit alimentaire à double texture selon la revendication 1, dans lequel le composant de fourrage a une teneur en humidité plus élevée que le composant à base de pâte.

3. Produit alimentaire à double texture selon la revendication 1, dans lequel le composant à base de pâte enferme complètement le composant de fourrage.

4. Produit alimentaire à double texture selon la revendication 1, dans lequel le composant à base de pâte cuit est un composant à base de pâte extrudé.

5. Procédé de production d'un produit alimentaire à double texture comprenant :
(a) la formation d'une pâte non cuite comprenant un mélange de fibres de composant à base de pâte qui est constitué de fibre soluble et de fibre insoluble dans un rapport de 9: 1 à 0,43 : 1, dans lequel la fibre soluble est constituée de fibre de maïs et, éventuellement, de maltodextrine résistante, et la fibre insoluble est constituée de fibre d'avoine et la pâte non cuite inclut 40 % en poids à 60 % en poids d'une teneur totale en fibres du produit alimentaire à double texture ;
(b) l'ajout d'un composant de fourrage en contact direct avec la pâte non cuite pour former un produit alimentaire non cuit, le composant de fourrage ayant une humidité relative de 0,6 à 0,8, et le composant de fourrage incluant un mélange de fibres de composant de fourrage constitué de fibre soluble et de fibre insoluble dans un rapport de 9:1 à 0,43 : 1, dans lequel la fibre soluble est constituée de fibre de maïs et, éventuellement, de maltodextrine résistante, et la fibre insoluble est constituée de fibre d'avoine et le composant de fourrage inclut 40 % en poids à 60 % en poids de la teneur totale en fibres du produit alimentaire à double texture ;
(c) la cuisson du produit alimentaire non cuit pour obtenir un produit alimentaire ayant une double texture incluant :
(i) un composant de fourrage cuit présent en une quantité de 35 % en poids à 60 % en poids du produit alimentaire à double texture, le composant de fourrage cuit ayant une texture molle maintenue sur l'ensemble de la durée de conservation du produit alimentaire, dans lequel le composant de fourrage inclut le mélange de fibres de composant de fourrage en une quantité de 1 à 20 % en poids du composant de fourrage ;
(ii) composant à base de pâte cuit ayant une texture croustillante maintenue sur l'ensemble de la durée de conservation du produit alimentaire, dans lequel la durée de conservation est d'au moins un mois, dans lequel le composant à base de pâte inclut le mélange de fibres à base de pâte en une quantité de 1 à 20 % en poids du composant à base de pâte ;
(iii) une teneur totale en fibres de 8 % en poids à 17 % en poids du produit alimentaire;
(iv) une humidité relative globale de 0,50 à 0,70 ;
(v) une teneur en humidité de 5 % à 15 %, telle que mesurée par une analyse Karl-Fischer.

6. Produit alimentaire à double texture selon la revendication 1 ou procédé selon la revendication 5, dans lequel le mélange de fibres de composant à base de pâte est constitué de fibre soluble et de fibre insoluble dans un rapport de 3:1 à 1:1, de préférence dans un rapport de 2:1.

7. Produit alimentaire à double texture selon la revendication 1 ou procédé selon la revendication 5, dans lequel le mélange de fibres de composant de fourrage est constitué de fibre soluble et de fibre insoluble dans un rapport de 3:1 à 1:1, de préférence dans un rapport de 2:1.

8. Produit alimentaire à double texture selon la revendication 1 ou procédé selon la revendication 5, dans lequel la fibre soluble du mélange de fibres de composant à base de pâte est constituée de fibre de maïs et de maltodextrine résistante, dans lequel la fibre de maïs et la maltodextrine résistante du mélange de fibres de composant à base de pâte sont dans un rapport de 1:1 à 9:1.

9. Produit alimentaire à double texture selon la revendication 1 ou procédé selon la revendication 5, dans lequel la fibre soluble du mélange de fibres de composant à fourrage de pâte est constituée de fibre de maïs et de maltodextrine résistante, dans lequel la fibre de maïs et la maltodextrine résistante du mélange de fibres de composant à base de pâte sont dans un rapport de 1:1 à 9:1.

10. Procédé selon la revendication 5, comprenant l'enfermement complet du composant de fourrage à l'intérieur de la pâte.

11. Procédé selon la revendication 5, comprenant la coextrusion de la pâte et du fourrage.

12. Procédé selon la revendication 5, dans lequel la formation d'un alimentaire non cuit comprend une extrusion.
